# EUROPEAN PATENT APPLICATION

(11) **EP 0 836 917 A1**
(43) Date of publication of application: **22.04.1998**
(21) Application number: 97660107.0
(22) Date of filing: 14.10.1997
(51) Int. Cl.: B27K 3/36, B27K 3/34

(54) **Preservation of wood against insect damage**

(30) Priority: 15.10.1996 FI 964147
(71) Applicant: UPM-Kymmene Oy, 00100 Helsinki (FI); KOSKISEN OY, 16600 Järvelä (FI); METSÄLIITTO OSUUSKUNTA, 02100 Espoo (FI)
(72) Inventor: Ritschkoff, Anne-Christine, 00530 Helsinki (FI); Korpela, Jaakko, 40100 Jyväskylä (FI); Lehtonen, Markku, 08350 Routio (FI); Lähteenmäki, Markku, 15870 Hollola (FI)
(74) Representative: Sundman, Christoffer

(57) **Abstract**

The invention relates to the use of an aminocarboxylic acid or aminocarboxylate in the preservation of wood against attack from insects, particularly from termites of the *Coptotermes* family or the house longhorn *(Hylotrypes bajulus).*

## Description

The present invention relates to the preservation of wood against damage caused by insects.

A plurality of different insect families such as beetle pests and termites can feed on wood thus causing extensive damage in structural timber. The damage is caused either so that the insects (or their larvae) consume wood as their nutrition, or alternatively, use the wooden material as their nesting environment. Insect attack will be evidenced in the wood as various gallery and bore patterns, whereby the wood utilized by the insects is converted into powdery frass. Typically, the strength properties of wood will degrade rapidly due to damage by insects.

In Finland, wood or wooden products need no separate preservation against insects, because here damage caused by insects is almost invariably associated by rot due to fungal attack. However, the situation is already entirely different with regard to Central and Southern Europe, where preservation of wood with the help of insecticides is a necessity. Insects causing damage to wood belong chiefly in these three major orders: *Isoptera, Coleoptera* and *Hymenoptera.* On a world-wide scale, damage from attack by insects is estimated to reach several billions of US dollars. Insects can attack living, standing wood, green felled wood, stored lumber and wood already installed in worked form (e.g., structural timber). Today, insects of different species cause extensive damage in Central and Southern Europe; in Finland insects occur as "secondary pests" only by attacking decaying wood predominantly.

Termites attacking wood belong to the order *Isoptera.* About 2000 different species are included in termites that occur principally in such climatic regions where the average annual temperature is at least 10 °C. Termites utilize the cellulosic component of wood which is decomposed by commensal microorganisms living in the gut of termites. Termites are divided into two major groups of which one is capable of degrading wood in contact with the ground or otherwise having a high moisture content, while the other group uses dry wood (moisture content below 13 %). In Europe, termites can be found chiefly in the southern part of Europe (e.g., in Portugal and Southern France), while local occurrence farther north is also known (e.g., in Hamburg). The termite species occurring in Europe are those favouring moist wood, whereby damage caused by them is principally inflicted on wood in direct contact with the ground.

In addition to termites, structural wood can be degraded by a plurality of insects, mostly beetle pests of which the most notorious ones are *Anobium punctatum, Lyctus brunneus* and *Hylotrypes bajulus.* Of these insects, *A. punctatum* is capable of degrading the sapwood of many species of coniferous and deciduous trees. *A. punctatum* utilizes the cellulosic component of wood and its gut contains yeasts and other microorganisms. While damage caused by *A. punctatum* is frequently associated with a high moisture content of the wood, in some cases insect attack has been found to occur at a moisture content as low as 15 %. *Hylotrypes bajulus* of the *Cerambycideae* family, which is common in Central and Southern Europe, is capable of degrading the sapwood of coniferous trees. *Lyctus brunneus* of the *Lyctideae* family known as a degrading infester of deciduous trees, is also a dangerous species causing great damage in Central and Southern Europe.

In addition to behaving as a fungicidal agent, a good wood preservative should be able to prevent damage from insects. Of wood preservatives currently in use, creosote oil, CCA and Na-PCP (pentachlorophenol) are also highly effective against insect attack. However, these wood preservatives have a wide toxic spectrum, and they contain a great number of components harmful to man and other nature. Consequently, the use of these preservatives is strictly controlled or even forbidden in many countries. Other compounds used for insect control are, e.g., solvent formulations of permetrin, dieldrin, bioresmetrin (pyrethroids), chloropyriphosphate and dichlorophosphate (organic phosphorus compounds) and some chlorinated hydrocarbons and carbamates. The use of these compounds also involves health and environmental risks.

According to current knowledge, boron compounds alone from the group of environmentally compatible compounds exhibit preservative properties against rot complemented with preservative efficacy against damage from insect attack (particularly from termites). However, boron is both expensive as a preservative and easily leached out from the wood.

Since a great number of insecticides used as wood preservatives are harmful to the environment, an urgent need exists to develop new preservation alternatives. Accordingly, it is an object of the present invention to overcome the drawbacks of prior-art technology and to provide an entirely novel approach to the preservation of wood from the attack of insects.

The goal of the invention is achieved by treating wood with an efficient amount of aminocarboxylate.

More specifically, the procedure according to the invention is characterized by what is stated in the characterizing part of claim 1.

As is generally known, metal-chelating agents such as aminocarboxylates are effective preservatives against wood decay caused by rot fungi. Their antirot effect is based on their capability of binding such metal species in the wood that are essential to the decay mechanism of rot fungi into a form making the metal species incapable of participating the fungal rot reactions. Hence, the preservative efficacy of these agents is not based on the general toxicity of aminocarboxylates, but instead on their specific inhibitory effect.

Unexpectedly, in conjunction with the present invention it has been found that aminocarboxylic acids and aminocarboxylates also exhibit preservative efficacy against some insect species attacking wood. For the time being, the mechanism of the insecticidal efficacy in the present use remains unresolved. However, it is plausible that here these compounds work in a different role from that of a wood preservative, because transition metals contained in wood are not known to participate in the metabolism of insects, thus contributing to their breeding and infestation in wood.

The invention offers significant benefits. Hence, the suitability of aminocarboxylates as insecticides is enhanced by their water-solubility, nontoxic character and low cost. With the help of aminocarboxylates, both sawn timber (using soaking treatment) and plywood can be preserved, whereby in the latter application the insecticidal agent is added in the glue (glue line), or alternatively, the veneer sheets can be treated separately. Also the treatment of ready-bonded plywood is possible.

Since aminocarboxylic acids and aminocarboxylates can also preserve wood from damage caused by rot and staining fungi, the invention makes it possible to achieve comprehensive preservation of wooden products against both rot, staining and insect attack in a single treatment.

In the following, the invention will be examined in greater detail with the help of a detailed description and a number of examples.

In the context of the present invention, the term "wooden material" refers to both felled wood (e.g., logs), sawn lumber and worked wood (e.g., structural lumber). Wooden material must also be understood to include composite materials such as plywoods and particle boards. Both deciduous and coniferous wood may be used in the wooden material. Thus, the invention can be used for preserving coniferous wood products made from pine, spruce or larch, or deciduous wood products made from, e.g., oak, beech, ash, birch, alder, poplar or aspen.

The term "insecticide", or correspondingly, the term "insecticidal agent" in the present context is used in making reference to an agent capable of preventing the breeding and infestation of insects in a substrate in such a manner that the insects or their larvae cannot utilize a wooden material as their nutrient or nesting environment. Hence, an additional role of the insecticide is to prevent sudden degradation of the strength properties of a wooden material.

The procedure according to the invention is used in preservation of wood against damage from insects chiefly belonging to three orders: *Isoptera, Coleoptera* and *Hymenoptera.* Wood-degrading termites are those of the order *Isoptera*: particularly noteworthy of them are the *Coptotermes formosanus* and *Mastotermes darwiniensis* termite species. Other important insect species are *Anobium punctatum* (furniture beetle), *Lyctus brunneus* (powder-post beetle), and *Hylotrypes bajulus* (house longhorn).

A particularly high preservation efficacy is achieved against attack from termites of the *Coptotermes* family and house longhorn.

According to the invention, the insecticidal agent used is an aminopolycarboxylic acid or a salt thereof having, e.g., acetic acid as the acid component. Examples of suitable compounds are aminodi-, aminotri- and aminotetracarboxylates including ethylene-diaminetetraacetic acid (EDTA), nitrilotriacetic acid (NTA), n-hydroxyethylethylenediaminetriacetic acid (HEDTA), diethylenetriaminepentaacetic acid (DTPA), ethylenediamine-di-(o-hydroxyphenylacetic acid (EDDHDA), diethanolglycine (DEG) and ethanoldiglycine (EDG), as well as alkali metal and earth alkali metal salts thereof including Na₂H₂EDTA and Na₄EDTA.

According to the invention, wood is treated with an insecticidally effective amount of an aminocarboxylate or aminocarboxylic acid. Optimal preservative contents for prevention of insect attack are 20 - 60 kg/m³ of wood volume in sawn lumber and 10 - 15 kg/m³ of wood volume in plywood. The wooden material is impregnated most advantageously as deep as possible with a solution having aminocarboxylic acid or a salt thereof, or alternatively, a mixture of aminocarboxylic acids or salts thereof, as the preventive agent. The concentration of the active agent in the solution may be varied in a wide range. Typically, the active agent is used for about 0.01 - 50 %, advantageously about 0.1 - 30 %, of the solution weight. The amount used varies according to the moisture content and transition metal content of the wood. Typically, in pressure impregnation the consumption of the preservation solution is about 300 - 500 l per cubic meter of wood when the wood moisture content is 20 % and the concentration of the active agent in the solution is about 25 %. Hence, if the mass of the wood being treated is 1 kg and the averaged density of the wood is about 500 kg/m³, the amount of preservative solution consumed in the impregnation process is about 0.6 - 1.01.

The solvent of the solution is advantageously water and the wood preservative may also be complemented with other conventionally used additives which promote the penetration of the solution into the wood. In addition to the biologically inert additives, the wood preservative according to the invention can contain conventional biologically active agents such as boron compounds, copper ions or complex compounds of copper. Besides water, also other solvents (e.g., alcohols such as ethanol and methanol), or alternatively, mixtures of water and such solvents, may be used for dissolving the aminocarboxylic acids or carboxylates. Herein, the proportion of water in these mixtures may vary in the range 1 - 99 vol.-%. Also various kinds of emulsions may be contemplated, whereby the active insecticide and the possible additives are dissolved in solvents of different phases of the emulsion. Thus, the expression "the aminocarboxylic acid and/or the salt thereof is impregnated into the wood in a solution" covers both the first alternative procedure in which impregnation is performed using a solution or mixture in which the active agent is in dissolved form as well as the second alternative procedure in which impregnation is carried out using an emulsion in which the active agent is not necessarily dissolved in all phases of the emulsion.

When desired, the aminocarboxylic acid or the aminocarboxylate can be precipitated into the wood, whereby a depot is formed serving to release the active agent so as to compensate for the leaching-out of the liquid-phase aminocarboxylic acid or aminocarboxylate from the wood. The precipitation of the active agent into the wood can be implemented at least in two different methods, namely through changing the pH or temperature of the solution. These methods are described more closely in FI Pat. No. 93,707.

The impregnation of the active insecticide preservative into the wood can be performed using any conventional technique including a pressure, a vacuum or a combination vacuum/pressure impregnation process. According to one alternative process, the aminocarboxylate solution is impregnated into the wooden material using a vacuum of about 10 - 95 %, advantageously about 70 - 90 %, of the atmospheric-air pressure (using a process time of about 10 min - 5 h, advantageously about 30 min - 2 h). Subsequently, the excess solution of the aminocarboxylic acid or the aminocarboxylate is removed, which step is first performed at atmospheric-air pressure and then in a partial vacuum. According to another alternative process, the method is carried out by impregnating said solution into the wood at an elevated temperature of, e.g., about 30 - 80 °C under pressure (about 2 - 6 barg, treatment time 5 min - 1 h). Subsequently, the pressure is elevated to 10 - 15 barg for 0.5 - 5 h in order to obtain improved penetration. After the impregnation step, the process pressure is reduced rapidly, the solution is dumped and the wood is subjected to posttreatment (in a vacuum of about 70 - 90 % of atmospheric-air pressure), wherein the evaporation of the penetrated solution results in the precipitation of the aminocarboxylic acid or the aminocarboxylate.

Furthermore, the solution of the aminocarboxylic acid or the aminocarboxylate and the acid solution can be alternatively penetrated into wood by means of soaking. This latter alternative process is easy to implement through, e.g., immersing the sawn lumber first in a vessel containing said active agent and then transferring the lumber after a desired time to another vessel filled with an acid solution. The soaking process is carried out using a maximally saturated solution, whereby the impregnation and acid treatment steps may vary in the range of about 1 min - 5 h. Typically, the soaking process of green sawn lumber is in the range of about 30 min - 2 h.

Next, the invention is elucidated with a number of examples. The exemplifying agent of the aminocarboxylate moiety in the examples is EDTA, whose efficacy on damage caused by insects was investigated by means of modified EN tests. The tests were carried out in Germany, in the facilities of BAM (Bundesanstalt für Materialforschung und -prüfung, Berlin). The test measures the resistance of EDTA-preserved plywood or sawn lumber to damage caused by termites and house longhorn (*Hylotrypes bajulus*).

### Example 1

The termite resistance of birch plywood having the sheets glued together using EDTA as the preservative in the glue (7 ply; 10 kg EDTA/m³) was tested according to the EN 117 standard using two termite species (*Coptotermes formosanus* and *Mastotermes darwiniensis*).

The *Mastotermes* termites degraded the comparative samples of plywood almost completely. While more material was left from test pieces containing EDTA, the efficacy of the preservative must be considered insufficient. By contrast, EDTA exhibited high efficacy as a preservative against damage from *Coptotermes* termites. In the *Coptotermes* termite test, all comparative samples were thoroughly bitten. Test pieces containing EDTA were weakly bitten with the exception of one test piece. Test pieces made from pine were destroyed fully. The EDTA-containing test pieces caused almost total eradication of termite workers with the exception of one test piece in which about one-third of the workers stayed alive. The results of the termite test are given in Table 1.

**Table 1.**

| **Efficacy of EDTA against damage caused by *Coptotermes formosanus* termites. Test pieces were subjected to attack by 200 workers and 30 soldiers. Test conditions were set to 26 °C and 92 %RH. Test duration was 39 days.** | | | | |
|---|---|---|---|---|
| Treatment | Sample no. in each batch | Living termites (%) | | Notes |
| | | Workers | Soldiers | |
| Comparative plywood sample | 1 | 89 | 83 | All test pieces thoroughly bitten |
| | 2 | 94 | 83 | |
| | 3 | 90 | 97 | |
| | 4 | 94 | 87 | |
| Test plywood containing EDTA in glue | 1 | 0 | 0 | Weakly bitten |
| | 2 | 36 | 83 | Thoroughly bitten |
| | 3 | 4 | 30 | Weakly bitten |
| | 4 | 9 | 67 | Weakly bitten |
| Comparative pine samples | 1 | 92 | 73 | All test pieces destroyed |
| | 2 | 92 | 100 | |
| | 3 | 87 | 90 | |
| | | | | |

### Example 2

The house longhorn test (*Hylotrupes bajulus*) was performed according to the EN 47 standard. The pine sapwood test pieces were vacuum-impregnated with 10 % Na₂-EDTA or Na₄-EDTA solution. The impregnated test pieces and nonimpregnated comparative samples were subjected to attack by the larvae of *H. bajulus* so that into each test piece were drilled six holes, after which a larva was placed in each of the holes. At the end of the test, the test pieces were split and the number of surviving larvae was counted.

EDTA exhibited high efficacy against attack by the larvae of *H. bajulus.* In test pieces treated with Na₄-EDTA, all larvae died during four weeks. In test pieces treated with Na₂-EDTA, all larvae were found dead at the end of the 8-week test period. The test results are given in Table 2.

**Table 2.**

| **Efficacy of Na**_{**2**}**-EDTA and Na**_{**4**}**-EDTA against attack from the larvae of house longhorn (Hylotrupes bajulus).** | | | | | | |
|---|---|---|---|---|---|---|
| Treatment | Number of samples in batch | Test duration (weeks) | Total number of larvae (pcs.) | | | Larvae lost (pcs.) |
| | | | Dead | | Surviving | |
| | | | no attack | attack | attack | |
| Compar. sample Na₄-EDTA | 5 | 4 | 1 | 0 | 28 | 1 |
| | 5 | 4 | 1 | 29 | 0 | 0 |
| Compar. sample | 5 | 12 | 0 | 0 | 29 | 1 |
| Na₂-EDTA | 4 | 4 | 0 | 23 | 1 | 0 |
| Na₄-EDTA | 1 | 12 | 0 | 6 | 0 | 0 |

The efficacy of EDTA against attack by furniture beetle (*Anobium punctatum*) has also been investigated, and these test results indicate at least a good efficacy.

## Claims

1. Use of an aminocarboxylic acid or aminocarboxylate for wood preservation against insect attack.

2. Use as defined in claim 1, **characterized** in that said aminocarboxylic acid or aminocarboxylate is selected from the group of compounds comprising aminodi-, aminotri- and arninotetracarboxylic acids and carboxylates.

3. Use as defined in claim 2, **characterized** in that said group of compounds comprises ethylenediaminetetraacetic acid (EDTA), nitrilotriacetic acid (NTA), n-hydroxyethylethylenediaminetriacetic acid (HEDTA), diethylenetriaminepentaacetic acid (DTPA), ethylenediamine-di-(o-hydroxyphenylacetic acid (EDDHDA), diethanolglycine (DEG) and ethanoldiglycine (EDG), as well as alkali metal and earth alkali metal salts thereof.

4. Use as defined in claim 3, **characterized** in that said compound is Na₂H₂EDTA or Na₄EDTA.

5. Use as defined in any of the foregoing claims, **characterized** in that wood is preserved against the attack of termites of the *Coptotermes* family or the house longhorn (*Hylotrypes bajulus*).

6. Use as defined in any of the foregoing claims, **characterized** in that in the preservation process is used 1 - 100 kg, advantageously about 5 - 80 kg aminocarboxylic acid or aminocarboxylate per cubic meter of wood.

7. Use as defined in any of the foregoing claims, **characterized** in that sawn lumber, plywood or particle board is preserved.

8. Use as defined in claim 6 or 7, **characterized** in that the preservative consumption in the preservation of sawn lumber is 20 - 60 kg/m³ of wood volume, and in the preservation of plywood, 10 - 15 kg/m³ of wood volume.

9. Use as defined in any of the claims 6 - 8, **characterized** in that the sawn lumber is vacuum-impregnated with EDTA or a potassium salt thereof.

10. Use as defined in any of the claims 6 - 8, **characterized** in that the EDTA or the potassium salt thereof is added to the glue of the plywood or particle board.

11. Use as defined in any of the foregoing claims, **characterized** in that an aqueous solution of the potassium salt of EDTA is used.

12. Use as defined in claim 11, **characterized** in that the potassium salt of EDTA is fixed in the wood by precipitation from said aqueous solution.
